# EUROPEAN PATENT APPLICATION

(11) **EP 4 716 349 A1**
(43) Date of publication of application: **25.03.2026**
(21) Application number: 25201449.3
(22) Date of filing: 10.09.2025
(51) Int. Cl.: H04W 72/566, H04W 74/0816, H04W 28/02, H04W 84/12, H04W 88/08

(54) **MECHANISMS FOR DYNAMIC STRUCTURING OF TRANSMISSION OPPORTUNITY PREEMPTION OPPORTUNITIES**

(30) Priority: 19.09.2024 US 202418890286
(71) Applicant: Nokia Technologies Oy, 02610 Espoo (FI)
(72) Inventor: DEZFOULI, Behnam, San Jose, 95128 (US); DOPPLER, Klaus Franz, Albany, 94706 (US); KASSLIN, Mika, 02770 Espoo (FI)
(74) Representative: Script Intellectual Property LLP

(57) **Abstract**

Embodiments described herein may include: (i) determining, based on receiving one or more notifications about event-triggered traffic in a sub-window of a preemption opportunity (PO), that a threshold quantity of transmissions is available to be scheduled in a transmission period; (ii) terminating, based on the threshold being met or exceeded, the PO; (iii) structuring, based on at least one of a number, type, or amount of traffic buffered by stations (STAs), the PO via an initial actions (IA) frame at a beginning of the PO; (iv) transmitting, based on detecting one or more collisions in the sub-window, a frame informing one or more stations (STAs) about one or more new sub-windows and their corresponding structures; and (v) transmitting, based on a second threshold quantity of notifications about event-triggered traffic being received, a trigger frame (TF) prior to an end of the sub-window.

## Description

### TECHNOLOGICAL FIELD

An example embodiment relates generally to mechanisms for dynamic structuring of transmission opportunity (TXOP) preemption opportunities (POs).

### BACKGROUND

Some wireless technologies rely on low latency data exchange and/or ultra-low latency data exchange. In some examples, stations (STAs), for example, such as Wi-Fi STAs, may need to support applications relying on low latency data exchange. Thus, there is a need to reduce latency for STAs, for example, such as long tails of latency for respective applications. In some examples, if a STA holds a transmission opportunity (TXOP), it may have exclusive access to a channel and/or prevent other STA(s) from transmitting during a respective period. Such exclusivity may lead to delays in transmission of traffic (e.g., high-priority traffic) by other STA(s), for example, such as those with event-triggered data exchange requirements.

### BRIEF SUMMARY

Apparatuses and methods are disclosed for mechanisms for dynamic structuring of TXOP POs. The apparatuses and/or methods disclosed herein may be configured at least to perform: (i) determining, based on receiving one or more notifications about event-triggered traffic in a sub-window of a preemption opportunity (PO), that a threshold quantity of transmissions is available to be scheduled in a transmission period; (ii) terminating, based on the threshold being met or exceeded, the PO; (iii) structuring, based on at least one of a number, type, or amount of traffic buffered by stations (STAs) and/or based on an estimated quantity of event-based frames eligible for TXOP preemption, the PO via an initial actions (IA) frame at a beginning of the PO, the PO via an initial actions (IA) frame at a beginning of the PO; (iv) transmitting, based on detecting one or more collisions in the sub-window, a frame informing one or more stations (STAs) about one or more new sub-windows and their corresponding structures; and (v) transmitting, based on a second threshold quantity of notifications about event-triggered traffic being received, a trigger frame (TF) prior to an end of the sub-window.

In an example embodiment, an apparatus is provided comprising at least one processor and at least one memory storing instructions that, when executed by the at least one processor, cause the apparatus at least to perform: (1) defining a preemption opportunity (PO) with one or more sub-windows, wherein a respective sub-window of the one or more sub-windows is associated with one or more traffic priority values; and (2) dynamically configuring, by an access point (AP), the preemption opportunity (PO), wherein the PO comprises a plurality of parameters including at least one of the following: (i) one or more sub-windows; (ii) one or more bands; (iii) one or more timeslots defined by respective intersections of the one or more sub-windows and the one or more bands; and/or (iv) one or more inter-frame spaces (IFSs) between at least two of the one or more sub-windows. In one example, the instructions, when executed by the at least one processor, further cause the apparatus at least to perform: (1) determining, based on receiving one or more notifications about event-triggered traffic, such as buffer status reports (BSRs), in a sub-window of a PO, that a threshold quantity of transmissions is available to be scheduled in a transmission period; and/or (2) terminating, based on the threshold being met or exceeded, the PO. In one example, the instructions, when executed by the at least one processor, further cause the apparatus at least to perform structuring, based on at least one of a number, type, or amount of traffic buffered by stations (STAs) and/or based on an estimated quantity of event-based frames eligible for TXOP preemption, the PO via an initial actions (IA) frame at a beginning of the PO, the PO via an initial actions (IA) frame at a beginning of the PO. In one example, the instructions, when executed by the at least one processor, further cause the apparatus at least to perform transmitting, based on detecting one or more collisions in the sub-window, a frame informing one or more stations (STAs) about one or more new sub-windows and their corresponding structures. In one example, the instructions, when executed by the at least one processor, further cause the apparatus at least to perform transmitting, based on a second threshold quantity of notifications about event-triggered traffic, such as buffer status report (BSR) frames, being received, a trigger frame (TF) prior to an end of the sub-window. In one example, the instructions, when executed by the at least one processor further cause the apparatus at least to perform terminating the PO early such that the terminating occurs within at least one of a plurality of inter-sub-window periods. In one example, the plurality of inter-sub-window periods is comprised of at least one of the following: (1) short inter-frame space (SIFS); (2) point coordination function (PCF) inter-frame space (PIFS); and/or (3) distributed coordination function (DCF) inter-frame space (DIFS). In one example, the instructions, when executed by the at least one processor, further cause the apparatus at least to perform determining whether the threshold is met or exceeded based on at least one of a maximum transmission period allowed by a transmission opportunity (TXOP) holder or another type of restriction enforced by the AP or other entities. In one example, the instructions, when executed by the at least one processor, further cause the apparatus at least to perform configuring at least one of the following: (1) a quantity of sub-windows; (2) a quantity of bands; and/or (3) a quantity of timeslots per sub-window. In one example, the instructions, when executed by the at least one processor further cause the apparatus at least to perform not allowing STAs with event-triggered traffic having a traffic priority value below a predetermined traffic priority value to report during the PO. In one example, the instructions, when executed by the at least one apparatus, further cause the apparatus at least to perform indicating which STA(s) of the one or more STAs are allowed to perform channel access in the one or more new sub-windows. In one example, the instructions, when executed by the at least one processor, further cause the apparatus at least to perform indicating permissible bands in which at least one of the one or more STAs that used the bands in a prior sub-window is allowed to perform channel access in the one or more new sub-windows. In one example, the instructions, when executed by the at least one apparatus, further cause the apparatus at least to perform configuring, based on the AP not transmitting a TF prior to an end of a current sub-window, at least one of the one or more STAs assigned to a next sub-window subsequent to the current sub-window to use any remaining time of the current sub-window as timeslots for channel access.

In an example embodiment, a method is provided comprising: (1) defining a preemption opportunity (PO) with one or more sub-windows, wherein a respective sub-window of the one or more sub-windows is associated with one or more traffic priority values; and (2) dynamically configuring, by an access point (AP), the preemption opportunity (PO), wherein the PO comprises a plurality of parameters including at least one of the following: (i) one or more sub-windows; (ii) one or more bands; (iii) one or more timeslots defined by respective intersections of the one or more sub-windows and the one or more bands; and/or (iv) one or more inter-frame spaces (IFSs) between at least two of the one or more sub-windows. In one example, the method further comprises: (1) determining, based on receiving one or more notifications about event-triggered traffic, such as buffer status reports (BSRs), in a sub-window of a PO, that a threshold quantity of transmissions is available to be scheduled in a transmission period; and/or (2) terminating, based on the threshold being met or exceeded, the PO. In one example, the method further comprises structuring, based on at least one of a number, type or amount of traffic buffered by stations (STAs) or based on an estimated quantity of event-based frames eligible for TXOP preemption, the PO via an initial actions (IA) frame at a beginning of the PO. In one example, the method further comprises transmitting, based on detecting one or more collisions in the sub-window, a frame informing one or more stations (STAs) about one or more new sub-windows and their corresponding structures. In one example, the method further comprises transmitting, based on a second threshold quantity of notifications about event-triggered traffic, such as buffer status report (BSR) frames, being received, a trigger frame (TF) prior to an end of the sub-window. In one example, the method further comprises configuring the AP to terminate the PO early such that the terminating occurs within at least one of a plurality of inter-sub-window periods. In one example, the plurality of inter-sub-window periods is comprised of at least one of the following: (1) short inter-frame space (SIFS); (2) point coordination function (PCF) inter-frame space (PIFS); and/or (3) distributed coordination function (DCF) inter-frame space (DIFS). In one example, the method further comprises configuring the AP to determine whether the threshold is met or exceeded based on at least one of a maximum transmission period allowed by a transmission opportunity (TXOP) holder or another type of restriction enforced by the AP or other entities. In one example, the structuring further comprises configuring at least one of the following: (1) a quantity of sub-windows; (2) a quantity of bands; and/or (3) a quantity of timeslots per sub-window. In one example, the method further comprises not allowing STAs with event-triggered traffic having a traffic priority value below a predetermined traffic priority value to report during the PO. In one example, the method further comprises configuring the AP to indicate which STA(s) of the one or more STAs are allowed to perform channel access in the one or more new sub-windows. In one example, the method further comprises configuring the AP to indicate permissible bands in which at least one of the one or more STAs that used the bands in a prior sub-window is allowed to perform channel access in the one or more new sub-windows. In one example, the method further comprises configuring, based on the AP not transmitting a TF prior to an end of a current sub-window, at least one of the one or more STAs assigned to a next sub-window subsequent to the current sub-window to use any remaining time of the current sub-window as timeslots for channel access.

In an example embodiment, an apparatus is provided comprising: (1) means for defining a preemption opportunity (PO) with one or more sub-windows, wherein a respective sub-window of the one or more sub-windows is associated with one or more traffic priority values; and (2) means for dynamically configuring, by an access point (AP), the preemption opportunity (PO), wherein the PO comprises a plurality of parameters including at least one of the following: (i) one or more sub-windows; (ii) one or more bands; (iii) one or more timeslots defined by respective intersections of the one or more sub-windows and the one or more bands; and/or (iv) one or more inter-frame spaces (IFSs) between at least two of the one or more sub-windows. In one example, the apparatus further comprises: (1) means for determining, based on receiving one or more notifications about event-triggered traffic, such as buffer status reports (BSRs), in a sub-window of a PO, that a threshold quantity of transmissions is available to be scheduled in a transmission period; and/or (2) means for terminating, based on the threshold being met or exceeded, the PO. In one example, the apparatus further comprises means for structuring, based on at least one of a number, type or amount of traffic buffered by stations (STAs), the PO via an initial actions (IA) frame at a beginning of the PO. In one example, the apparatus further comprises means for transmitting, based on detecting one or more collisions in the sub-window, a frame informing one or more stations (STAs) about one or more new sub-windows and their corresponding structures. In one example, the apparatus further comprises means for transmitting, based on a second threshold quantity of notifications about event-triggered traffic, such as buffer status report (BSR) frames, being received, a trigger frame (TF) prior to an end of the sub-window. In one example, the apparatus further comprises means for configuring the AP to terminate the PO early such that the terminating occurs within at least one of a plurality of inter-sub-window periods. In one example, the plurality of inter-sub-window periods is comprised of at least one of the following: (1) short inter-frame space (SIFS); (2) point coordination function (PCF) inter-frame space (PIFS); and/or (3) distributed coordination function (DCF) inter-frame space (DIFS). In one example, the apparatus further comprises means for configuring the AP to determine whether the threshold is met or exceeded based on at least one of a maximum transmission period allowed by a transmission opportunity (TXOP) holder or another type of restriction enforced by the AP or other entities. In one example, the structuring further comprises configuring at least one of the following: (1) a quantity of sub-windows; (2) a quantity of bands; and/or (3) a quantity of timeslots per sub-window. In one example, the apparatus further comprises means for not allowing STAs with event-triggered traffic having a traffic priority value below a predetermined traffic priority value to report during the PO. In one example, the apparatus further comprises means for configuring the AP to indicate which STA(s) of the one or more STAs are allowed to perform channel access in the one or more new sub-windows. In one example, the apparatus further comprises means for configuring the AP to indicate permissible bands in which at least one of the one or more STAs that used the bands in a prior sub-window is allowed to perform channel access in the one or more new sub-windows. In one example, the apparatus further comprises means for configuring, based on the AP not transmitting a TF prior to an end of a current sub-window, at least one of the one or more STAs assigned to a next sub-window subsequent to the current sub-window to use any remaining time of the current sub-window as timeslots for channel access.

In an example embodiment, a non-transitory computer readable storage medium is provided comprising computer instructions that, when executed by an apparatus, cause the apparatus at least to perform: (1) defining a preemption opportunity (PO) with one or more sub-windows, wherein a respective sub-window of the one or more sub-windows is associated with one or more traffic priority values; and (2) dynamically configuring, by an access point (AP), the preemption opportunity (PO), wherein the PO comprises a plurality of parameters including at least one of the following: (i) one or more sub-windows; (ii) one or more bands; (iii) one or more timeslots defined by respective intersections of the one or more sub-windows and the one or more bands; and/or (iv) one or more inter-frame spaces (IFSs) between at least two of the one or more sub-windows. In one example, the computer instructions, when executed by the apparatus, further cause the apparatus at least to perform: (1) determining, based on receiving one or more notifications about event-triggered traffic, such as buffer status reports (BSRs), in a sub-window of a PO, that a threshold quantity of transmissions is available to be scheduled in a transmission period; and/or (2) terminating, based on the threshold being met or exceeded, the PO. In one example, the computer instructions, when executed by the apparatus, further cause the apparatus at least to perform structuring, based on at least one of a number, type or amount of traffic buffered by stations (STAs), the PO via an initial actions (IA) frame at a beginning of the PO. In one example, the computer instructions, when executed by the apparatus, further cause the apparatus at least to perform transmitting, based on detecting one or more collisions in the sub-window, a frame informing one or more stations (STAs) about one or more new sub-windows and their corresponding structures. In one example, the computer instructions, when executed by the apparatus, further cause the apparatus at least to perform transmitting, based on a second threshold quantity of notifications about event-triggered traffic, such as buffer status report (BSR) frames, being received, a trigger frame (TF) prior to an end of the sub-window. In one example, the computer instructions, when executed by the apparatus, further cause the apparatus at least to perform configuring the AP to terminate the PO early such that the terminating occurs within at least one of a plurality of inter-sub-window periods. In one example, the plurality of inter-sub-window periods is comprised of at least one of the following: (1) short inter-frame space (SIFS); (2) point coordination function (PCF) inter-frame space (PIFS); and/or (3) distributed coordination function (DCF) inter-frame space (DIFS). In one example, the computer instructions, when executed by the apparatus, further cause the apparatus at least to perform configuring the AP to determine whether the threshold is met or exceeded based on at least one of a maximum transmission period allowed by a transmission opportunity (TXOP) holder or another type of restriction enforced by the AP or other entities. In one example, the structuring further comprises configuring at least one of the following: (1) a quantity of sub-windows; (2) a quantity of bands; and/or (3) a quantity of timeslots per sub-window. In one example, the computer instructions, when executed by the apparatus, further cause the apparatus at least to perform not allowing STAs with event-triggered traffic having a traffic priority value below a predetermined traffic priority value to report during the PO. In one example, the computer instructions, when executed by the apparatus, further cause the apparatus at least to perform configuring the AP to indicate which STA(s) of the one or more STAs are allowed to perform channel access in the one or more new sub-windows. In one example, the computer instructions, when executed by the apparatus, further cause the apparatus at least to perform configuring the AP to indicate permissible bands in which at least one of the one or more STAs that used the bands in a prior sub-window is allowed to perform channel access in the one or more new sub-windows. In one example, the computer instructions, when executed by the apparatus, further cause the apparatus at least to perform configuring, based on the AP not transmitting a TF prior to an end of a current sub-window, at least one of the one or more STAs assigned to a next sub-window subsequent to the current sub-window to use any remaining time of the current sub-window as timeslots for channel access.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
FIG. 1 is a diagram of an example communication system;
FIG. 2 is a block diagram of an apparatus that may be specifically configured in accordance with an example embodiment of the present disclosure;
FIG. 3 is a representation of a transmission opportunity (TXOP);
FIG. 4 is a representation of a preemption opportunity (PO);
FIG. 5 is a representation of contention-based channel access;
FIG. 6 is a representation of opportunistic channel access;
FIG. 7 is a representation of both contention-based channel access and opportunistic channel access;
FIG. 8 is a representation of an access point (AP) announcing parameters of a PO to one or more stations (STAs) via an initial actions (IA) period;
FIG. 9 is a representation of contention-based frame transmission in sub-window entries;
FIG. 10 is a representation of transmission failure by a respective STA;
FIG. 11 is a representation of early PO termination;
FIG. 12A is a representation of AP-dependent PO structuring;
FIG. 12B is a representation of AP-dependent PO structuring;
FIG. 13A is a representation of collision mitigation;
FIG. 13B is a representation of collision mitigation;
FIG. 14A is a representation of dynamic sub-window size adjustment;
FIG. 14B is a representation of dynamic sub-window size adjustment;
FIG. 15A is a representation of dynamic sub-window size adjustment;
FIG. 15B is a representation of dynamic sub-window size adjustment;
FIG. 16 is an example method implemented by one or more apparatuses described herein;
FIG. 17 is an example method implemented by one or more apparatuses described herein; and
FIG. 18 is an example method implemented by one or more apparatuses described herein, in accordance with an example embodiment of the present disclosure.

### DETAILED DESCRIPTION

Some embodiments of the present disclosure will now be described more fully hereinafter with reference to the accompanying drawings, in which some, but not all, embodiments of the disclosure are shown. Indeed, various embodiments of the disclosure may be embodied in many different forms and should not be construed as limited to the example embodiments set forth herein; rather, these example embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with example embodiments of the present disclosure. Thus, use of any such terms should not be taken to limit the spirit and scope of example embodiments of the present disclosure.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device (such as a core network apparatus), field programmable gate array, and/or other computing device.

A communications system may be deployed in a wireless local area network (e.g., WLAN, Wi-Fi, etc.), for example, based on IEEE 802.11 standards and/or related drafts, such as 802.11-2020, 802.11ac, 802.11ax, 802.11be, 802.11bn, and/or others. That is, the system may be an example of a WLAN system. The WLAN system may support wireless communications between one or more communications devices in accordance with one or more Wi-Fi protocols. In some examples, Wi-Fi communications may occur via one or more radio frequency bands, such as about 2.4 GHz radio frequency band and/or about 5GHz radio frequency band. In some such examples, each radio frequency band may support one or more channels over which data may be communicated. In some examples, multiple devices may use multiple channels to communicate over the WLAN simultaneously.

A WLAN system may include one or more communications devices, such as one or more access points (APs) and/or one or more non-AP stations (STAs). That is, a device configured to support one or more Wi-Fi protocols may be an example of an AP (e.g., may operate in accordance with an AP mode) and/or may be an example of a STA (e.g., may operate in accordance with a non-AP STA mode). In some examples, an AP may control Wi-Fi communications for one or more non-AP STAs. For example, an AP may be (or may be connected to) a central entity used to establish (and/or control) one or more connections between one or more non-AP STAs and another network (e.g., the Internet). In other words, in some examples, the AP may connect a wired network (e.g., the Internet) to a wireless network (e.g., the WLAN). In some instances, a Wi-Fi network may be identified via one or more identifiers, such as a service set identifier (SSID).

A WLAN system may support one or more architectures (types of logical relationships between devices). For example, a WLAN system may support an autonomous architecture, a centralized architecture, a cooperative architecture, and/or other types of architectures. In some examples of an autonomous architecture, APs are stand-alone APs configured with features and capabilities to operate without any reliance on another device. In some examples of a centralized architecture, a centralized network manager may regulate the operation of the WLAN. In other words, the network manager may be the AP or may be connected to one or more APs within the WLAN. For example, APs may be connected (e.g., wirelessly and/or via a wired connection) to a central entity which may be configured to act as a network manager. In some examples, the network manager is an entity in cloud-based entity which may reside either in private cloud or in public cloud. In some examples of a cooperative architecture (also referred to as a network manager-less or controller-less architecture), a virtual management (e.g., cloud-based) system may be used to control a WLAN. For example, the virtual management system may employ a cooperative communication method between one or more APs to control the WLAN. In other examples, a centralized network manager may use a wireless system to provide local connection to clients (e.g., STAs). For example, the centralized network manager may be a controller configured to perform operations related to authentication, authorization, accounting (e.g., via an authentication, authorizing, and accounting (AAA) server), and/or other operations.

Additionally, or alternatively, a WLAN system may support one or more topologies (types of physical connections between various devices within the WLAN system). For example, the WLAN system may support an infrastructure topology which may include a combination of wired and wireless connections. In some examples of an infrastructure topology, the infrastructure topology may include one or more wired devices with a wired connection to a network (e.g., one or more APs that are each connected via a cable to a switch) and the one or more wired devices may support one or more wireless connections to one or more wireless devices (e.g., laptops, tablets, cell phones), such that the wireless devices may connect wirelessly to the network. In other words, the one or more wired devices may serve as a bridge between the wireless network and the wired network. Additionally, or alternatively, the WLAN system may support an ad hoc topology, which does not rely on infrastructure (e.g., cables, routers, servers, or APs). In some examples of an ad hoc network, one or more non-AP STAs (also referred to as clients) may wirelessly connect to other devices in a peer-to-peer network. Additionally, or alternatively, the WLAN system may support a mesh topology in which multiple network devices are interconnected with each other via wireless connections. For example, in accordance with a mesh topology, an AP (e.g., each AP), which may support one or more wireless connections with one or more STAs, may communicate wirelessly with one or more other APs.

In accordance with one or more Wi-Fi protocols, data may be transmitted wirelessly between two devices (e.g., an AP and a non-AP STA) via packets, referred to as protocol data units (PDUs). In other words, Wi-Fi communications may include transmission and reception of one or more PDUs. For example, data may be communicated via a frame (e.g., a medium access control (MAC) frame), which may include one or more PDUs. In some instances, multiple frames may include the same PDU. In some examples, a PDU may include data (referred to as a payload), as well as one or more headers (e.g., a sequence of one or more fields) and/or one or more trailers (e.g., a sequence of bits appended to the PDU, after the payload). In some examples, the data included in the PDU, may be user data, control data, management data, and/or other types of data. In some examples, frames may include data type frames, control type frames, management type frames, and/or other types of frames. At least one frame type (e.g., each frame type) may be included in a PDUs, wherein a payload of a PDU may comprise user data, control data, management data, and/or other data. In some examples, a WLAN system may implement one or more security protocols to protect the confidentiality, integrity, and availability of Wi-Fi communications.

A transmission opportunity (TXOP) is a MAC feature in IEEE 802.11. TXOPs are also features in other standards. TXOPs are configured to increase throughput, such as for high priority data, by providing contention-free channel access for a period of time. A TXOP may be available in a quality of service (QoS) mode as part of Enhanced Distributed Channel Access (EDCA), and/or may be a limited time period of contention-free channel access available to the channel-owning station (e.g., the TXOP holder). During such a period the TXOP holder, which may be a non-AP STA or an AP, may send multiple frames that meet criteria that may have been determined for the use of TXOP. In some examples, the criteria may allow transmission of frames belonging to an access category (AC) other than the AC for which the TXOP has been obtained. An advantage of a TXOP is that it may increase throughput and/or reduce delay of QoS data frames by eliminating contention periods between transmissions. TXOP may be used in combination with aggregation and block acknowledgement to further increase throughput.

In some examples, access categories have different channel access parameters, for example, such as Arbitration Interframe Spacing (AIFS), duration, contention window size, and TXOP limit. In an example, as part of the EDCA parameters of the IEEE 802.11 standard, these values are set so that higher priority packets are favored (e.g., the non-AP STA waits less before sending them, the contention window is smaller, multiple packets can be sent in a TXOP, etc.). In some examples, a TXOP holder which may be either non-AP STA or an AP may send frames to multiple recipients during a TXOP. In addition to QoS data frames, other frames can be exchanged in the course of the TXOP, such as ACK and BlockAckReq/BlockAck frames, and/or other control and management frames.

A WLAN system may comprise at least one STA. An AP of a WLAN system may comprise at least one STA and/or at least one distribution system access function configured to facilitate data communication beyond the AP. Additionally or alternatively, non-AP STAs may be configured to be end devices which rely on association with an AP to communicate with devices other than the AP. An AP may be configured to connect to a wired LAN (e.g., via Ethernet). The AP may allow one or more client devices (e.g., non-AP STAs) to access wireless connections via WLAN. The client devices may also be referred to as "WLAN clients". WLAN clients may comprise various devices and/or types of devices, including laptops, tablets, cell phones, and/or other devices.

A WLAN system may further rely on multi-link operation (MLO) to improve data transmission (e.g., via using multiple frequency bands for transmissions). In some examples, MLO further comprises various features, including simultaneous transmit and receive (STR), multi-channel multi-radio (MCMR), enhanced multi-AP roaming (E-MAR), non-simultaneous transmit and receive (NSTR), multi-link multi-radio (MLMR), and/or other features.

An AP which supports MLO may be referred to as an AP multi-link device (MLD). An MLO-capable client, for example, such as a non-AP STA, may be referred to as a non-AP MLD. Such a client device may have two or more STAs with which it may establish links to an AP MLD. A STA-AP connection may represent a link between an AP MLD and a non-AP MLD. In some examples, APs which do not support MLO may be multi-band APs which have two or more APs operating in different bands and/or channels. Such an AP may operate, for example, in 2.4 GHz and/or in 5 GHz bands, wherein a client device may connect to the AP via any of the bands and/or channels. For example, a client device may associate to the AP in one of the channels. An AP MLD may perform like a multi-band AP while providing means for a multi-link capable client (non-AP MLD) to simultaneously use two or more of its radios and/or APs for communication with single association. An AP MLD may be an MLMR which is configured to communicate simultaneously with its APs with associated non-AP MLDs. Non-AP MLDs may have restrictions (e.g., NSTR) which may mean that simultaneous communication over established links may not be possible. Therefore, a non-AP MLD may associate to an AP MLD, meaning the non-AP MLD may be associated over two or more bands and/or channels and may communicate with the APs affiliated to the AP MLD over the established links.

WLAN devices configured with STR may be configured to allow simultaneous transmission and/or reception via different respective frequency bands, which may reduce latency. WLAN devices configured with MCMR may be configured to allow data transmission via two or more radios and/or channels, which may increase efficiency, reduce congestion, and/or increase network speeds. WLAN devices configured with E-MAR may be configured to allow client devices to switch between a plurality of respective APs while maintaining their connections, which may allow more consistent connectivity. WLAN devices configured with NSTR may be configured to allow client devices to non-simultaneous transmission and/or reception via different respective frequency bands, which may reduce latency (particularly in comparison with single-link operation). WLAN devices configured with MLMR may be configured to allow different respective radios and/or channels to be used for managing respective links, which may reduce interference and/or improve network performance.

A WLAN system may be configured with various types of services sets, for example, such as basic service set (BSS) and/or an extended service set (ESS). A BSS may be comprised of an AP and one or more client devices (e.g., non-AP STAs) associated with the AP. The one or more client devices may have one or more common PHY medium access characteristics (e.g., radio frequency, modulation scheme, security settings, and/or the like). A BSS identifier (BSSID) may define the BSS such that the one or more client devices of the BSS share the same BSSID.

In some examples, two or more BSSs may have overlapping coverage areas and they may operate with either partially or entirely same radio frequency channels. In such examples of overlapping BSSs (OBSSs), a client device may transmit frames from the area of overlap; other client devices may sense the transmission. Responsive to sensing the transmission, the other client devices may cease their own transmissions. In some examples, if the other client devices do not sense the transmission, the other client devices may become hidden terminals with respect to the client device which is transmitting.

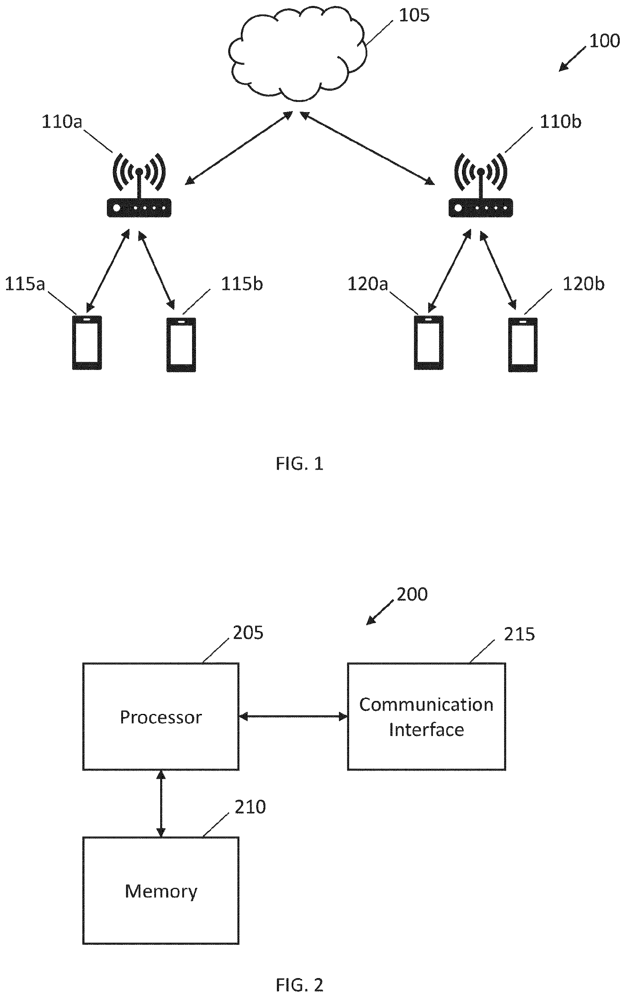

One example of a communications system 100 in which an example embodiment may be deployed is depicted in FIG. 1. The communications system 100 may be utilized for a variety of applications. For example, the communications system 100 may include at least one cloud network 105, at least one AP such as the APs 110a and 110b (collectively "110"), at least one client device (e.g., non-AP STA) such as the client devices 115a and 115b (collectively "115") connected to the AP 110a and the client devices 120a and 120b (collectively "120") connected to the AP 110b, and/or other components. The APs 110 may be mobile access points (mAPs) with limited functionality. In some examples, a configuration comprising a mAP and a client device may be implemented as part of a peer-to-peer connection, for example, as in Wi-Fi Direct. In some examples, a device is able to simultaneously operate as client device and as an AP. One such an example case is a multi-AP network which comprises of two or more devices which act as APs and use Wi-Fi for the wireless backhaul connectivity based on the non-AP STA - AP connection model.

Wireless communication systems may include access points that provide wireless connectivity according to the Wi-Fi standards, which are a subset of the IEEE 802 family of standards. For example, the medium access control (MAC) and physical layer (PHY) specifications for Wi-Fi access points are defined by IEEE 802.11 for transmitting and receiving data in frequency bands such as 2.4 gigahertz (GHz), 3.6 GHz, 5 GHz, 6 GHz, 60 GHz, and/or the like. Wi-Fi access points may transmit one or more frames. For example, the one or more frames may include data frames, management frames, and/or control frames, which may be transmitted in unicast messages, broadcast messages, or multicast messages. The 802.11 standards define an inter-frame space (IFS) as the nominal time (in microseconds, µs) that the MAC and PHY require in order to receive the last symbol of a frame, process the frame, and respond with the first symbol of the earliest possible response frame.

In FIG. 1, client devices 115 and/or 120 are configured to be in a wireless connection with at least one Wi-Fi AP (e.g., the APs 110). Functionalities of the at least one Wi-Fi AP may be implemented by various entities and/or types of entities, for example, such as APs, mAPs, access nodes, nodes, hosts, servers, base stations, and/or other entities suitable for such usage. Functionalities of the at least one client device may be implemented by various entities and/or types of entities, for example, such as clients-side user devices, non-AP STAs, user equipment (UEs), and/or other entities suitable for such usage.

In some examples, the communications system 100 may support radio frequency sensing during IFS. In some examples, the communications system 100 may include a transceiver for transmitting and/or receiving signals. The transceiver may be implemented as a single integrated circuit (e.g., using a single application-specific integrated circuit (ASIC) or field-programmable gate array (FPGA)) or as a system-on-a-chip (SOC) that includes different modules for implementing the functionality of the transceiver. The network manager may include a processor and/or a memory (e.g., such as a processor 205 and/or a memory 210, further described with respect to FIG. 2). The processor 205 may be used to execute instructions stored in the memory 210 and/or to store information in the memory 210, for example, such as the results of the executed instructions.

The Wi-Fi APs 110 may include transceivers for transmitting and/or receiving signals, for example, over a backbone and/or over an access interface. A transceiver may be implemented as a single integrated circuit (e.g., using a single ASIC or FPGA) or as a SOC that includes different modules for implementing the functionality of the transceiver.

An apparatus 200 may be implemented by a user device to which resources on the access interface are allocated and assigned, and thus any feature described herein with a user device may be implemented with a corresponding apparatus, such as the apparatus 200. The Wi-Fi AP 110 may further include a processor (e.g., such as the processor 205) and a memory (e.g., such as the memory 210). The processor 205 may be used to execute instructions stored in the memory 210 and/or to store information in the memory 210, for example, such as the results of the executed instructions.

The apparatus 200 may be configured to function as the cloud network 105, APs 110, client devices 115 and/or 120, and/or other entities. As shown in FIG. 2, the apparatus includes, is associated with, and/or is in communication with: a processor 205, a memory 210, and a communication interface 215. The processor 205 may be in communication with the memory device 210 via a bus for passing information among components of the apparatus 200. The memory device 210 may be non-transitory and may include, for example, one or more volatile and/or non-volatile memories. In other words, for example, the memory device 210 may be an electronic storage device (e.g., a computer readable storage medium) comprising gates configured to store data (e.g., bits) that may be retrievable by a machine (e.g., a computing device like the processor). The memory device 210 may be configured to store information, data, content, applications, instructions, or the like for enabling the apparatus to carry out various functions in accordance with an example embodiment of the present disclosure. For example, the memory device 210 could be configured to buffer input data for processing by the processor. Additionally or alternatively, the memory device 210 may be configured to store instructions for execution by the processor 205.

FIG. 2 depicts an example of a simplified block diagram of an apparatus according to various embodiments of the present disclosure, whose implementation may differ from what is shown. The connections shown in FIG. 2 are logical connections; the actual physical connections may be different. It is apparent to a person skilled in the art that the system typically comprises also other functions and structures than those shown in FIG. 2.

The apparatus 200 may, in some embodiments, be embodied in various computing or communication devices as described above. However, in some embodiments, the apparatus may be embodied as a chip or chip set. In other words, the apparatus may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus may therefore, in some cases, be configured to implement an embodiment of the present disclosure on a single chip or as a single system on a chip (SOC). As such, in some cases, a chip or chipset may constitute means for performing one or more operations for providing the functionalities described herein.

The processor 205 may be embodied in a number of different ways. For example, the processor 205 may be implemented by processing circuitry. For example, the processor 205 may be embodied as one or more of various hardware processing means such as a coprocessor, a microprocessor, a controller, a digital signal processor (DSP), a processing element with or without an accompanying DSP, or various other circuitry including integrated circuits such as, for example, an application specific integrated circuit (ASIC), a field programmable gate array (FPGA), a microcontroller unit (MCU), a hardware accelerator, a special-purpose computer chip, and/or the like. As such, in some embodiments, the processor 205 may include one or more processing cores configured to perform independently. A multi-core processor may enable multiprocessing within a single physical package. Additionally or alternatively, the processor 205 may include one or more processors configured in tandem via the bus to enable independent execution of instructions, pipelining and/or multithreading.

In an example embodiment, the processor 205 may be configured to execute instructions stored in the memory device 210 or otherwise accessible to the processor 205. Alternatively or additionally, the processor 205 may be configured to execute hard coded functionality. As such, whether configured by hardware or software methods, or by a combination thereof, the processor 205 may represent an entity (e.g., physically embodied in circuitry) capable of performing operations according to an embodiment of the present disclosure while configured accordingly. Thus, for example, when the processor 205 is embodied as an ASIC, FPGA, and/or the like, the processor 205 may be specifically configured hardware for conducting the operations described herein. Alternatively or additionally, as another example, when the processor 205 is embodied as an executor of instructions, the instructions may specifically configure the processor to perform the algorithms and/or operations described herein when the instructions are executed. However, in some cases, the processor 205 may be a processor of a specific device (e.g., an image or video processing system) configured to employ an embodiment of the present disclosure by further configuration of the processor by instructions for performing the algorithms and/or operations described herein. The processor 205 may include, among other things, a clock, an arithmetic logic unit (ALU), and/or logic gates configured to support operation of the processor 205.

The communication interface 215 may be a device and/or circuitry embodied in either hardware or a combination of hardware and software that is configured to receive and/or transmit data, including media content in the form of video or image files, one or more audio tracks, and/or the like. In this regard, the communication interface 215 may include, for example, an antenna (or multiple antennas) and supporting hardware and/or software for enabling communications with a wireless communication network. Additionally or alternatively, the communication interface 215 may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware/software for supporting communication via cable, digital subscriber line (DSL), universal serial bus (USB) or other mechanisms.

In some examples, the apparatus 200 may be an access point (AP) or a non-AP station (STA) (e.g., such as a client device) usable in a Wi-Fi network operating in accordance with wireless standards (e.g., IEEE 802.11 standards). In some examples, a transmission opportunity (TXOP) may be a time interval during which a station (STA), which could be either an access point (AP) or a non-AP STA, has the right to initiate transmissions via a wireless medium. In some examples, a TXOP holder may be a STA that has gained the right to access the wireless medium for a certain period. In some examples, a preemption opportunity (PO) may be a specific time interval within a TXOP during which some STAs other than the TXOP holder are allowed to contend for channel access. In some examples, an access category (AC) may be a classification used to prioritize different types of traffic within a network. In some examples, an AC may be referred to as a priority and/or priority level. In some examples, at least one AC (e.g., each AC) may have a unique priority level.

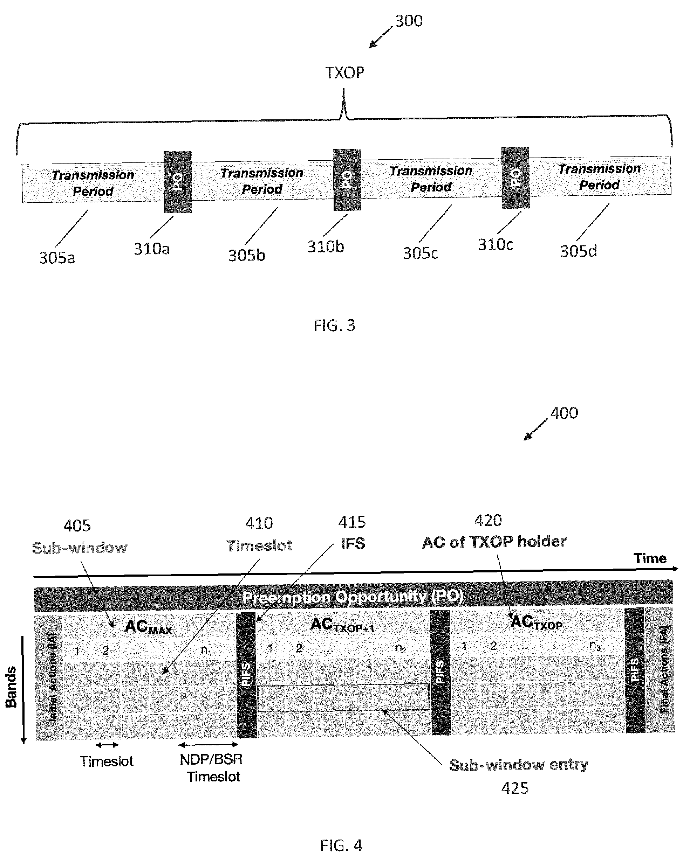

Referring now to FIG. 3, a representation of a TXOP 300 is provided. The TXOP 300 may be comprised of two types of time intervals. In some examples, the TXOP 300 may be comprised of more than two types of time intervals. For example, the TXOP 300 may be comprised of one or more transmission periods 305a, 305b, 305c, and 305d (collectively "305") and/or one or more preemption opportunities (POs) 310a, 310b, and 310c (collectively "310").

Referring now to FIG. 4, a representation of a PO 400 is provided. The PO 400 may provide an opportunity for a STA to send one or more traffic notifications in at least one part of one or more POs within a TXOP (e.g., during a first PO). The one or more traffic notifications may be at least one of the following: event-triggered traffic notifications, low latency traffic notifications, interactive traffic notifications, periodic traffic notifications, bursty traffic notifications, and/or the like. The one or more traffic notifications may be received by an AP. The AP may use the traffic notifications and/or information indicated by the traffic notifications to schedule uplink (UL) and/or downlink (DL) transmissions during at least one transmission period following a respective (e.g., current) transmission period. The AP may or may not be a TXOP holder.

A structure of the PO 400 may include one or more sub-windows 405, one or more timeslots 410, one or more inter-frame spaces (IFSs) 415, one or more traffic priority values 420 (e.g., one or more AC values), one or more sub-window entries 425, and/or other components. In some examples, the traffic priority values 420 may be AC values, wherein the one or more traffic priority values 420 may include a maximum AC value AC_{MAX}, an AC value of the TXOP holder AC_{TXOP}, an AC value 1 greater than the AC value of the TXOP holder AC_{TXOP+1}, and/or other AC values. In some examples, the traffic priority values 420 may be determined based on differentiated services code points (DSCPs), wherein DSCPs may be mapped to user priority values and/or AC values.

The one or more sub-windows 405 may comprise one or more sub-windows. A respective sub-window (e.g., each sub-window) of the one or more sub-windows 405 may be associated with one or more traffic access categories (e.g., one or more traffic AC values). A quantity of the one or more sub-windows 405 may be determined based on various parameters. For example, the quantity of the one or more sub-windows 405 may be determined based on traffic priority values, for example, such as an AC value of the TXOP holder AC_{TXOP}, traffic buffered by the AP, interval(s) between POs, and/or other parameters.

The PO 400 may further comprise one or more bands (depicted as rows in FIG. 4). A respective band (e.g., each band) may represent one or more frequency bands, resource units (RUs), channels, and/or the like. For example a band may represent a 20 MHz channel. In some examples, 20 MHz channels are used when STAs contend for channels in the time domain. Smaller RUs may be used, for example, if STAs submit traffic notifications (e.g., event-triggered traffic notifications, low latency traffic notifications, interactive traffic notifications, periodic traffic notifications, bursty traffic notifications, and/or the like) in an orthogonal frequency-division multiple access (OFDMA) fashion. For example, the traffic notifications submitted via OFDMA may be submitted via randomly-selected bands.

The PO 400 may comprise one or more intersections of the one or more sub-windows 405 and the one or more bands such that a respective intersection of the one or more intersections is a sub-window entry 425 comprising one or more timeslots 410. In some examples, the timeslots 410 may be used for various applications, including: channel sensing, transceiver mode switching (e.g., between transmission (Tx) and reception (Rx)), transmission of traffic notification frames (e.g., event-triggered traffic notifications, low latency traffic notifications, interactive traffic notifications, periodic traffic notifications, bursty traffic notifications, and/or the like), and/or other applications.

The IFSs 415 may be configured to be between the sub-windows 405. In some examples, the AP may be configured to modify and/or terminate the PO during its executing.

The PO 400 may further comprise an initial actions (IA) period at a beginning of the PO 400. The IA period may be optionally included in the PO 400. The IA period may allow the AP to send management and/or control frames pertaining to the PO 400. For example, STAs may synchronize to the AP during the IA period (e.g., during an IA frame). In some examples, the IA frame may initiate the PO 400. The IA period may be used by the AP and the TXOP holder to exchange information. For example, the information may include information about structure of the PO including, as an example, a maximum allowed preemption duration. In some examples, the PO 400 may not include the IA period; in such cases, STAs may use a last data frame sent in an immediately preceding transmission period to determine PO initiation. For example, the last data frame may include an indication (e.g., in its medium access control (MAC) header) that the PO 400 should be initiated (e.g., should begin) after the last data frame.

The PO 400 may further comprise a final actions (FA) period at an end of the PO 400. The FA period may allow the AP to send management and/or control frames pertaining to PO execution. For example, the AP may utilize the FA period to send at least one trigger frame (TF) to schedule UL and/or DL transmissions (e.g., via OFDMA), thus ending the PO 400. In some examples, the AP may utilize the FA period to send at least one Contention Free-End (CF-End) frame.

In the example of FIG. 4, the PO 400 includes: three sub-windows 405; three bands; nine sub-window entries 425; and n₁, n₂, and n₃ timeslots 410 in the first, second, and third sub-windows, respectively. In the example of FIG. 4, the final timeslot of each sub-window is long enough to accommodate a traffic notification frame (e.g., event-triggered traffic notification frame, low latency traffic notification frame, interactive traffic notification frame, periodic traffic notification frame, bursty traffic notification frame, and/or the like) such as a buffer status report (BSR) frame.

In some examples, client devices (e.g., non-AP STAs) and APs set up a traffic stream. In the setup phase, the APs and the client devices exchange information about traffic characteristics. In the setup, a client may indicate to the AP traffic characteristics and/or service requirements so that the AP can serve the client appropriately. An AP can use such information as an example for determining how often to trigger the client and/or grant resources for its UL transmissions. This type of setup signaling may be extended to include information about event-based traffic and its needs. Such setup may result in a deal between an AP and a client which can be referred in the PO. PO structure information may, as an example, indicate which clients are eligible to use the PO based on the stream setup signaling, and in which sub-windows, as an example, clients are eligible to transmit and/or contend for transmission of traffic notifications.

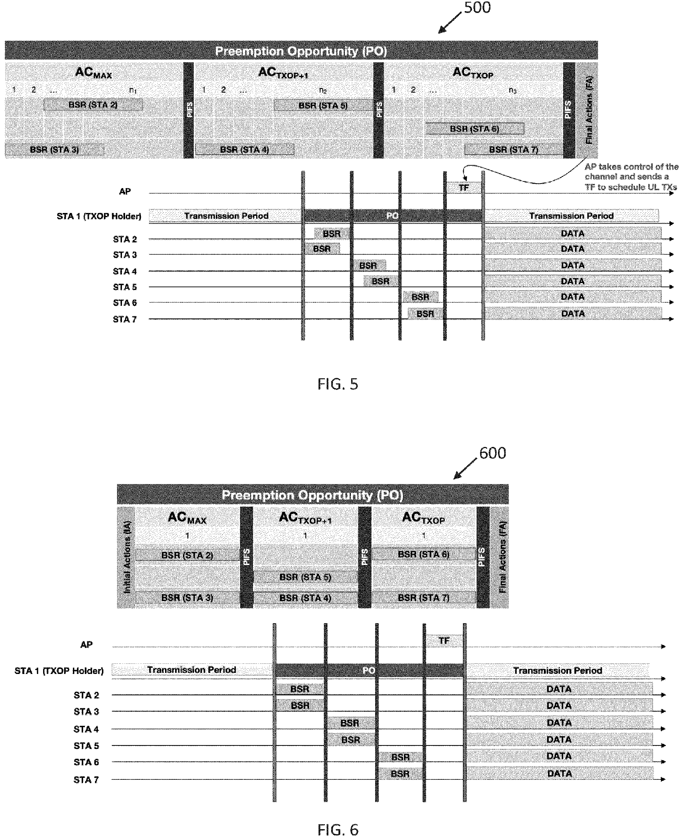

FIGS. 5-7 show representations of various channel access methods. Depending on PO structure, respective sub-windows may comprise one or more timeslots. A duration of a final timeslot of the respective sub-windows may be long enough to accommodate a traffic notification frame (e.g., event-triggered traffic notification frame, low latency traffic notification frame, interactive traffic notification frame, periodic traffic notification frame, bursty traffic notification frame, and/or the like) such as a buffer status report (BSR) frame. In some examples, if a sub-window comprises only one timeslot, the duration of the one timeslot is long enough to accommodate transmission of the traffic notification frame. Therefore, respective sub-window entries (e.g., each sub-window entry) may be used for transmission of at least one BSR frame. Channel access methods in respective sub-windows depend on quantities of timeslots of the respective sub-windows. In some examples, channel access methods include contention-based channel access, opportunistic channel access, and/or other channel access methods.

Referring now to FIG. 5, a representation of contention-based channel access 500 is provided. Based on a sub-window comprising two or more timeslots, contention-based channel access may be utilized. One or more STAs associated with respective sub-window entries may compete for channel access. The one or more STAs may send respective traffic notifications (e.g., event-triggered traffic notifications, low latency traffic notifications, interactive traffic notifications, periodic traffic notifications, bursty traffic notifications, and/or the like) in the respective sub-windows.

In at least some technologies (e.g., IEEE 802.11), competition-based, random-access channel access methods are used (e.g., carrier-sense multiple access (CSMA), distributed coordination function (DCF), enhanced distributed chancel access (EDCA), and/or the like). In such channel access methods, STAs are configured to compete sequentially. Embodiments described herein, such as embodiments of PO structure (e.g., the example of FIG. 4), may result in greater channel contention efficiency based on assigning STAs to sub-window entries in time and frequency domains. In the embodiments described herein, STAs may be configured to compete in multiple sub-windows and/or multiple POs. To perform carrier sensing, frequency domain resources may correspond to a respective channel (e.g., a 20 MHz channel) such that interference from adjacent channels is suppressed.

The example of FIG. 5 shows a sample scenario, within a PO, of contention-based channel access for sending traffic notifications, specifically, BSR frames. In this example of contention-based channel access 500, STA 1 is a TXOP holder and STAs 2-7 are STAs not having TXOPs (e.g., non-TXOP STAs, non-TXOP-holding STAs, and/or the like). STA 2 and STA 3 are configured to transmit BSR frames during a first sub-window associated with AC_{MAX}. STA 5 and STA 4 are configured to transmit BSR frames during a second sub-window associated with AC_{TXOP+1}. STA 6 and STA 7 are configured to transmit BSR frames during a third sub-window associated with AC_{TXOP}. In this example, the PO does not include an IA period and includes an FA period. An AP is configured to take control of a channel during the FA period to send a TF to schedule UL and/or DL transmissions.

Referring now to FIG. 6, a representation of opportunistic channel access 600 is provided. Based on a sub-window comprising only one timeslot, opportunistic channel access may be utilized. Respective STAs may be configured to randomly select sub-window entries in which they may immediately transmit traffic notifications (e.g., event-triggered traffic notifications, low latency traffic notifications, interactive traffic notifications, periodic traffic notifications, bursty traffic notifications, and/or the like). If a sub-window has only one timeslot, the one timeslot is of a duration long enough to accommodate a traffic notification report frame such as a BSR frame. To increase efficiency and allow additional STAs to transmit traffic notifications, STAs may use OFDMA transmission, RUs smaller than 20 MHz, and/or other strategies.

The example of FIG. 6 shows a sample scenario, within a PO, of opportunistic channel access for sending traffic notifications, specifically, BSR frames. In this example of opportunistic channel access 600, STA 1 is a TXOP holder and STAs 2-7 are STAs not having TXOPs (e.g., non-TXOP STAs, non-TXOP-holding STAs, and/or the like). STA 2 and STA 3 are configured to transmit BSR frames during a first sub-window associated with AC_{MAX}. STA 5 and STA 4 are configured to transmit BSR frames during a second sub-window associated with AC_{TXOP+1}. STA 6 and STA 7 are configured to transmit BSR frames during a third sub-window associated with AC_{TXOP}. In this example, the PO includes an IA period and an FA period. An AP is configured to take control of a channel during the FA period to send a TF to schedule UL and/or DL transmissions.

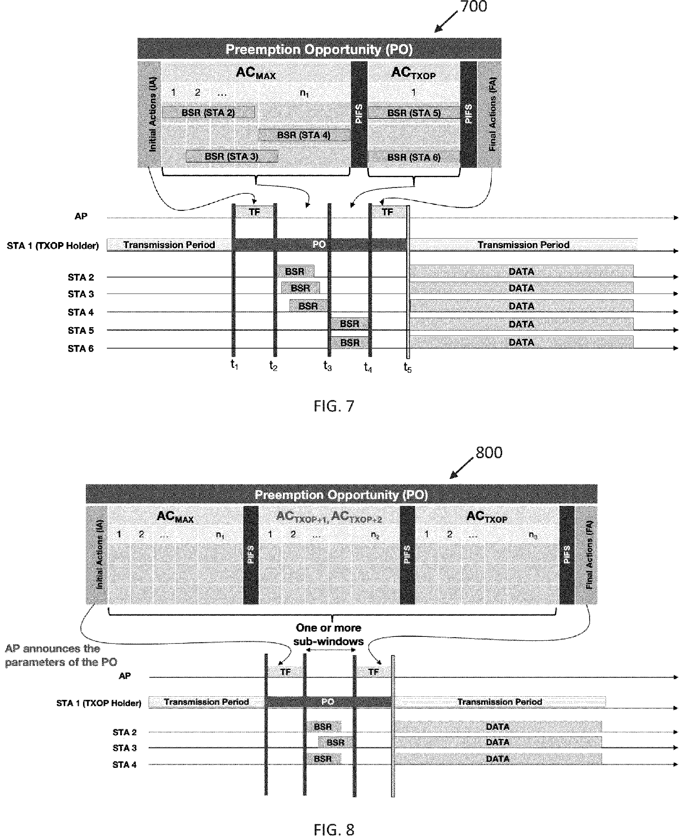

Referring now to FIG. 7, a representation of both contention-based channel access and opportunistic channel access is provided. In some examples, PO structures configured according to the various embodiments described herein may utilize either or both of contention-based and/or opportunistic channel access methods.

The example of FIG. 7 shows a sample scenario, within a PO, of a combined contention-based and opportunistic channel access method for sending traffic notifications, specifically, BSR frames. In this example of combined channel access 700, STA 1 is a TXOP holder and STAs 2-6 are STAs not having TXOPs (e.g., non-TXOP STAs, non-TXOP-holding STAs, and/or the like). STA 2, STA 3, and STA 4 are configured to transmit BSR frames during a first sub-window (comprising two or more timeslots) associated with AC_{MAX}. STA 5 and STA 6 are configured to transmit BSR frames during a second sub-window (comprising only one timeslot) associated with AC_{TXOP}. In this example, the PO includes an IA period and an FA period.

In the example of FIG. 7, the PO is divided by time markers t₁, t₂, t₃, t₄, and t₅. During the period defined by t₂ and t₃, STAs with traffic associated with AC_{MAX} are configured to compete to send their BSR frames in their respective sub-window entries. During the period defined by t₃ and t₄, STAs with traffic associated with AC_{TXOP} are configured to send their BSR frames in their respective sub-window entries.

A PO structure such as the PO structure of FIG. 7 may be used, for example, if the quantity of STAs associated with AC_{MAX} is greater than the quantity of STAs associated with AC_{TXOP}. In this case, an AP may use a contention-based method to ensure increased reliability of BSR reception from STAs associated with AC_{MAX} and a less reliable transmission of BSR frames from STAs with traffic associated with AC_{TXOP}.

Traffic notifications (e.g., event-triggered traffic notifications, low latency traffic notifications, interactive traffic notifications, periodic traffic notifications, bursty traffic notifications, and/or the like) may be variously transmitted; for example, they may be transmitted via BSR frames, bitmaps (e.g., of MAC headers, PHY headers, and/or the like), data payloads, and/or other methods. For example, if traffic notifications are transmitted via bitmaps, respective bits (e.g., each bit) may correspond to a specific AC of traffic buffered by a respective STA. In some examples, a PO may not include an IA period.

Referring now to FIG. 8, a representation of an AP announcing parameters of a PO 800 to one or more STAs via an IA period is provided. The IA period may be used by the AP to take control of a channel to perform preliminary actions at a beginning of the PO. The IA period may be used by the AP to announce parameters of the PO, wherein the parameters may comprise: (i) type(s) of transmissions to which the PO is dedicated (e.g., traffic notifications, specific types of traffic notifications such as BSR frames, and/or the like); (ii) quantities of bands, frequency bands, channels, and/or RUs which are available for channel access; (iii) quantities of sub-windows and/or their associated AC values; (iv) quantities of timeslots (e.g., per sub-window); (v) duration(s) of timeslots; and/or (vi) STA assignments to various bands (e.g., based on STA location, STA association identifier (AID), and/or the like).

In absence of an IA period, PO structure may be announced via beacon frames (e.g., dedicating a first PO of respective TXOPs to sending BSR frames) and/or via information fields and/or bits (e.g., in a MAC header of an immediately preceding data frame sent during a previous transmission period). Additionally or alternatively, the standard my indicate that the first POs of respective TXOPs are dedicated to sending traffic notifications (e.g., event-triggered traffic notifications, low latency traffic notifications, interactive traffic notifications, periodic traffic notifications, bursty traffic notifications, and/or the like).

The example of FIG. 8 shows a sample scenario, within a PO (e.g., the PO 800), of an AP using an IA period to announce parameters of the PO to STAs. For example, the PO may make the announcement via a TF. In this example, STA 1 is a TXOP holder and STAs 2-4 are STAs not having TXOPs (e.g., non-TXOP STAs, non-TXOP-holding STAs, and/or the like). STA 2, STA 3, and STA 4 are configured to transmit BSR frames during one or more sub-windows (e.g., associated with various AC values such as AC_{TXOP+1}, AC_{TXOP+2}, and/or the like). In this example, the PO includes an IA period and an FA period. The AP announces parameters of the PO via a TF during the IA period.

In some examples, the AP may not use the IA period. In such cases, STAs may use global and/or previously announced parameters to utilize the PO. For example, STAs may be assigned to sub-window entries in the time domain and in the frequency domain via different approaches.

For example, in the time domain, STAs with traffic having AC values greater than or equal to AC_{TXOP} may use their respective sub-window to contend for channel access. Additionally or alternatively, STAs may determine their sub-window based on the type(s) and/or amount of their buffered data (e.g., buffered low latency (LL) data).

For example, in the frequency domain, respective STAs (e.g., each STA) may randomly select one or the available bands. Additionally or alternatively, a seed value may be shared with the STAs such that respective STAs (e.g., each STA) use the seed value and their AID (e.g., in a function) to determine their band in a pseudo-random fashion. Additionally or alternatively, STAs may be assigned to bands based on their location, which may minimize hidden-node collisions.

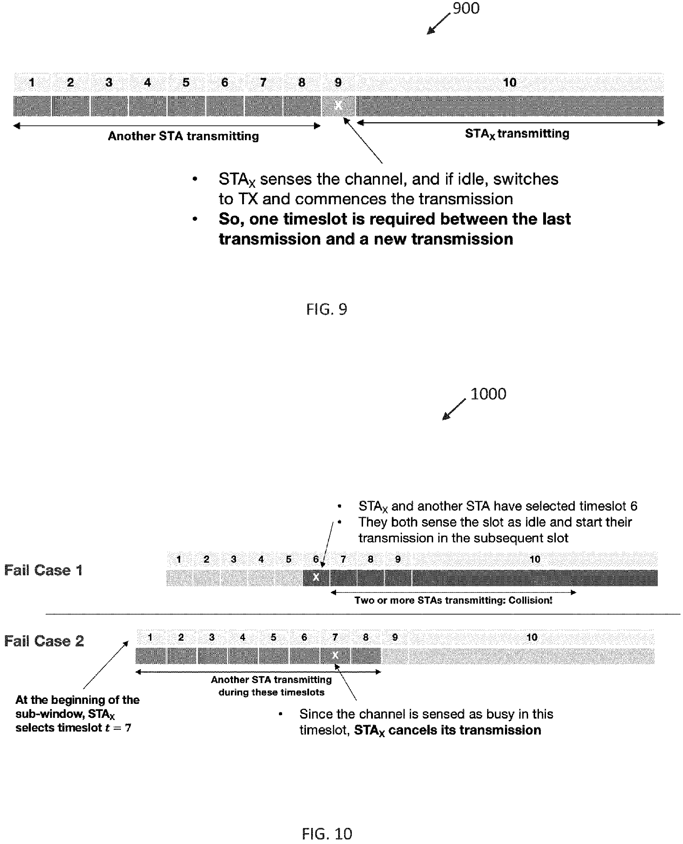

Referring now to FIG. 9, a representation of contention-based frame transmission 900 in sub-window entries is provided. For example, based on a respective sub-window entry comprising two or more timeslots, STAs may perform contention-based channel access to transmit their traffic notifications (e.g., event-triggered traffic notifications, low latency traffic notifications, interactive traffic notifications, periodic traffic notifications, bursty traffic notifications, and/or the like).

In the example of FIG. 9, respective STAs (e.g., each STA) may be configured to select a timeslot for contention at a beginning of the sub-window. For example, based on a respective STA selecting timeslot t, the STA may sense the channel in that timeslot. Based on the channel being idle during timeslot t, transmission may begin in the subsequent timeslot. In some examples, if t = 1, transmission in timeslot t = 1 may be initiated without performing channel sensing. In some examples, if a sub-window includes n + 1 timeslots, the final timeslot which can be selected by a STA is timeslot n (e.g., due to a final slot being configured to be empty between a last transmission and a new transmission).

Referring now to FIG. 10, a representation of transmission failure by a respective STA is provided. In this example, transmission of a station STAx fails. Two fail cases are provided in FIG. 10. In fail case 1, transmission of STAx fails as a result of one or more other stations selecting the same timeslot as STAx. Thus, one or more STAs transmit in the same timeslot, resulting in collisions. In fail case 2, STAx does not transmit in its selected timeslot due to the channel being busy in its selected timeslot.

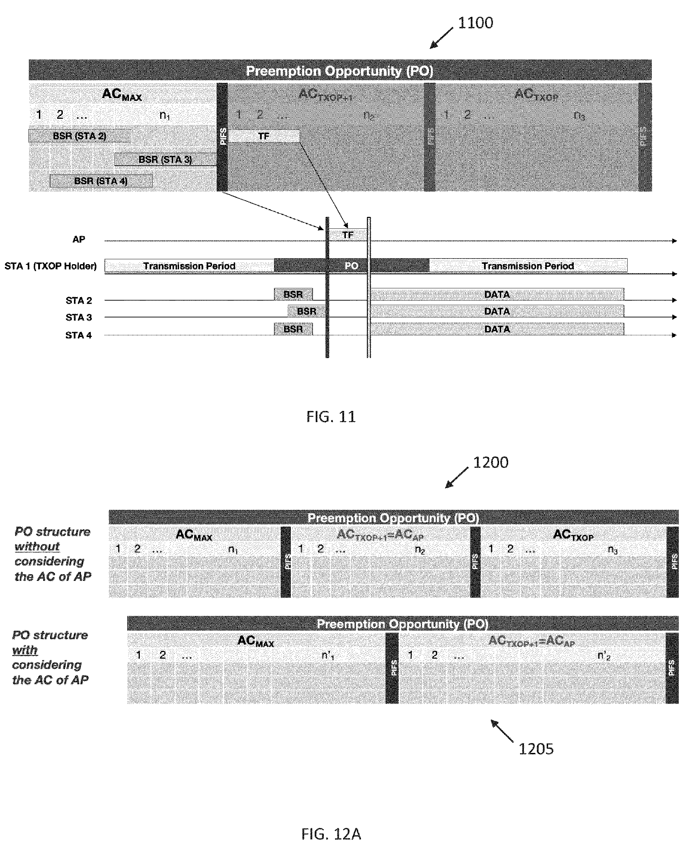

Referring now to FIG. 11, a representation of early PO termination 1100 is provided. In some examples, such as in the example of FIG. 11, an AP may terminate a PO early. In these cases, "early" may be used to indicate that the PO is terminated prior to transmissions in all of its sub-windows. Such early termination may occur within at least one of one or more inter-sub-window periods of the PO. In FIG. 11, the inter-sub-window periods are denoted by "PIFS" (standing for point coordination function (PCF) inter-frame space). Additionally or alternatively, the inter-sub-window periods may be short inter-frame spaces (SIFS) and/or distributed coordination function (DCF) inter-frame spaces (DIFS).

For example, in an implementation of the early PO termination 1100, the AP may terminate the PO when a threshold of traffic notifications (e.g., event-triggered traffic notifications, low latency traffic notifications, interactive traffic notifications, periodic traffic notifications, bursty traffic notifications, and/or the like) received from one or more non-AP STAs has been met and/or exceeded. In this case, the AP may determine, for example, based on a maximum transmission period allowed by a TXOP holder, that a threshold of UL and/or DL transmissions may be scheduled after receiving traffic notification such as BSRs in a first sub-window of the PO. The threshold of UL and/or DL transmissions may be a threshold in a time domain and/or in a frequency domain.

In the example of FIG. 11, the AP determines, after the first sub-window, that there is enough data to fill an inter-PO interval (e.g., wherein "enough" indicates that the threshold has been met and/or exceeded). Based on this determination, the AP may terminate the PO "early" and/or send a trigger frame (TF) to schedule UL and/or DL transmissions. Advantages of early PO termination, in some examples, include shorter PO durations, faster delivery of traffic notifications, higher channel utilization, and/or other advantages.

FIGS. 12A-12B show an example of AP-dependent PO structuring. In an IA frame at a beginning of a PO, an AP may structure the PO, for example, based on a type and/or quantity of traffic buffered for UL and/or DL transmission. Such structuring may include configuration of various parameters, including at least a quantity of sub-windows, a quantity of bands, a quantity of timeslots per sub-window, and/or other parameters.

In the example of FIGS. 12A-12B, the AP has data belonging to AC_{AP}, wherein the value of AC_{AP} is greater than the value of AC_{TXOP}. In this case, the AP may be among a plurality of STAs configured with the ability to preempt the PO to send their own UL and/or DL traffic. The AP may limit the quantity of sub-windows of the PO such that the sub-window associated with the lowest-priority AC is the sub-window associated with AC_{AP}. STAs having traffic belonging to an AC lower than the AC associated with the AP (AC_{AP}) may not be allowed to report during the PO. Advantages of AP-dependent PO structuring, in some examples, include increased channel access success by STAs with certain types of traffic (e.g., such as event-triggered traffic, low latency traffic, interactive traffic, periodic traffic, bursty traffic, and/or the like), shorter PO durations, and/or other advantages.

Referring now to FIG. 12A, a representation of AP-dependent PO structuring is provided. In FIG. 12A, the AP has buffered data belonging to AC_{TXOP+1}. The AP may prevent one or more STAs having AC values below AC_{TXOP+1} from transmitting their BSRs. The AP may prevent such STAs from transmitting their BSRs by using IA durations and/or by structuring the PO such that an AC value associated with the AP (AC_{AP}) is either considered in structuring the PO. In the example of FIG. 12A, the PO 1200 represents the PO prior to structuring, and the PO 1205 represents the PO after structuring.

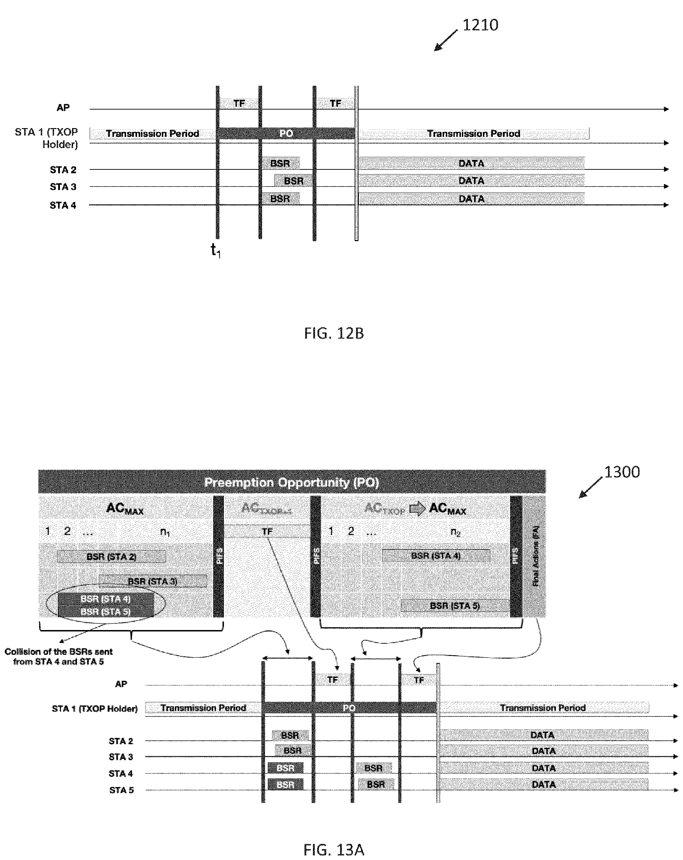

Referring now to FIG. 12B, a representation of AP-dependent PO structuring 1210 is provided. To inform one or more STAs about a quantity of sub-windows in the PO, the AP utilizes an IA period. For example, the AP may take control of a channel at a beginning of the PO (e.g., before the one or more STAs start to perform channel contention). In the example of FIG. 12B, at time t₁ (e.g., at an SIFS occurring after a final transmission of a transmission period), a frame such as a TF sent by the AP may indicate the structure of the PO to the one or more STAs. The frame may further include information indicating other information, including a quantity of timeslots per sub-window, RU allocations for contention, minimum and/or maximum AC values allowed in the PO, and/or other information.

FIGS. 13A-13B show an example of collision mitigation. An AP may detect one or more collisions in a sub-window. The AP may take control of the channel and/or the PO after (e.g., immediately after) the sub-window in which the one or more collisions occurred. Based on taking control of the channel and/or the PO, the AP may send a frame (e.g., a BSR poll (BSRP) frame, a TF, and/or the like) to announce one or more new sub-windows and their structures. To reduce contention during one or more subsequent sub-windows, the AP may announce (e.g., via the TF) which STAs may or may not perform channel contention. The AP may further indicate permissible bands. Based on the indicated permissible bands, STAs which had previously selected one of the permissible bands may be allowed to once again contend for channel access.

Referring now to FIG. 13A, a representation of collision mitigation is provided. In the example of FIG. 13A, STA 1 is a TXOP holder and STAs 2-5 are contending for channel access. In the example of FIG. 13A, a collision occurs during a PO 1300. The collision between STA 4 and STA 5 occurs in a third band of a sub-window associated with AC_{MAX}. The collision indicates that at least one of the STAs is buffering traffic with an AC value equivalent to AC_{MAX}. In this case, the AP may perform at least one of the following: (1) sending, by the AP and based on a threshold quantity of BSRs being met and/or exceeded during the sub-window associated with AC_{MAX}, at least one TF for scheduling UL and/or DL traffic from the STAs with traffic having AC = AC_{MAX}; and/or (2) announcing, by the AP, at least one new sub-window in which STAs with traffic having AC = AC_{MAX} may transmit frames (e.g., such as BSR frames).

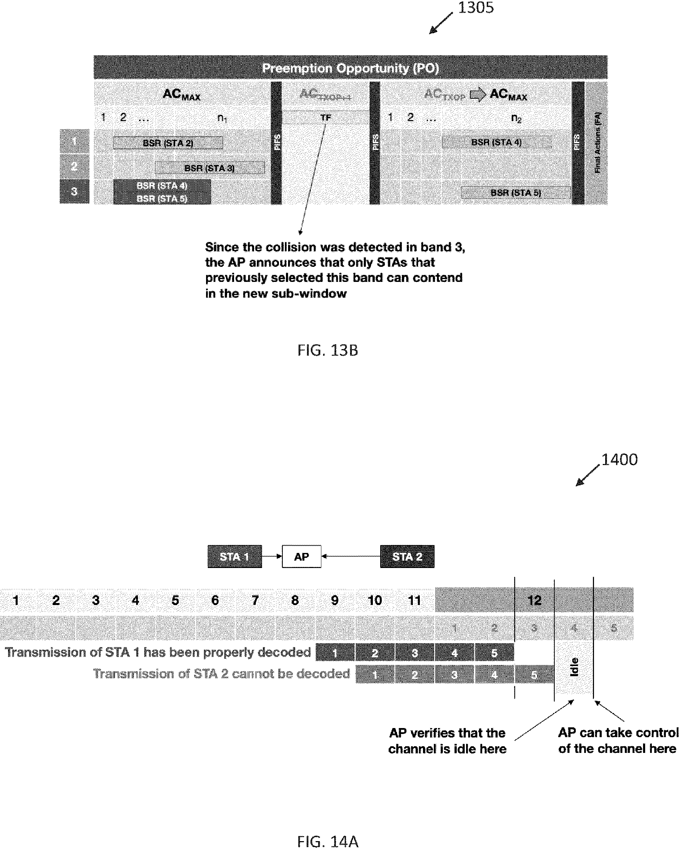

Referring now to FIG. 13B, a representation of collision mitigation is provided. In the example of FIG. 13B, the collision mitigation occurs with respect to a PO 1305. In the example of FIG. 13B, STA 1 (not shown) is a TXOP holder and STAs 2-5 are contending for channel access. STA 4 and STA 5 experience a collision in a third band of a sub-window associated with AC_{MAX}. In this example, the AP announces (e.g., via a TF) a new sub-window in which STAs with traffic having AC = AC_{MAX} may contend for channel access. The AP may further inform the at least one of the STAs that STAs which previously contended in the band in which the collision occurred (e.g., the third band) may once again contend in the newly-announced sub-window. Therefore, STA 4 and STA 5 may be allowed to contend in the newly-announced sub-window.

FIGS, 14A-14B and 15A-15B show an example of dynamic sub-window size adjustment. Based on timeslots selected by one or more STAs, wherein a final timeslot of an immediately prior sub-window is long enough to accommodate a traffic notification (e.g., event-triggered traffic notifications, low latency traffic notifications, interactive traffic notifications, periodic traffic notifications, bursty traffic notifications, and/or the like), at least a portion of the final timeslot may pass without transmission(s) occurring during the portion. In effect, the portion may be "wasted". In some examples, channel access methods described herein may include the transmission(s) ending during the final timeslot of the sub-window, after which there may be no more transmission(s) in that sub-window. This may be due to the last timeslot available for selection for channel access being a timeslot prior to a final timeslot of respective sub-windows (e.g., each sub-window). In some examples, it may be beneficial and/or necessary for the AP to send a TF; the AP would thus wait until an end of the sub-window and/or a PIFS period before sending the TF. Additionally or alternatively, STA(s) belonging to a subsequent AC may not use a period during which the AP is sending the TF for channel access contention. Embodiments of the present disclosure, in some examples, provide solutions to such problems.

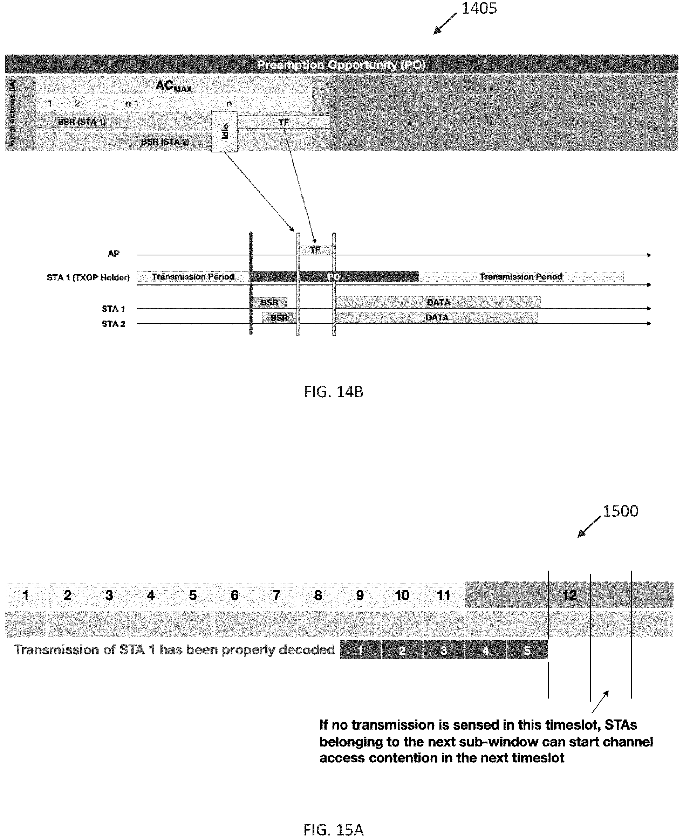

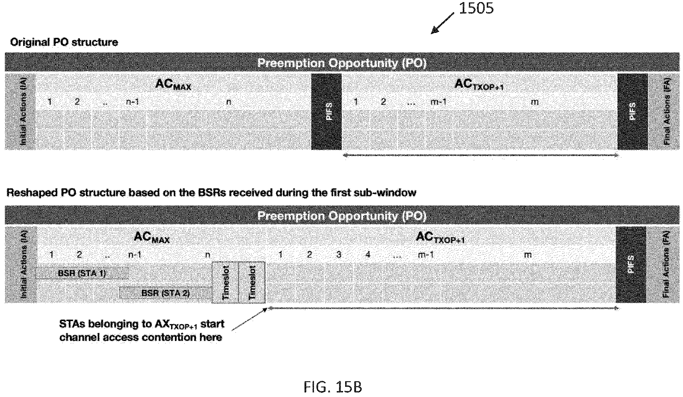

In one example, suppose that a final transmission within a sub-window ends prior to an end of a final timeslot of the sub-window. FIGS. 14A-14B provide a first example mid-timeslot action (MTA) which may be implemented in such a situation. FIGS. 15A-15B provide a second example MTA which may be implemented in such a situation.

Referring now to FIGS. 14A-14B, a first example representation of dynamic sub-window size adjustment is provided. Based on enough traffic notification frames (e.g., event-triggered traffic notifications, low latency traffic notifications, interactive traffic notifications, periodic traffic notifications, bursty traffic notifications, and/or the like) being received from one or more STAs during a sub-window, an AP may take control of a channel to send a TF (e.g., prior to an end of the sub-window). In this example, "enough" can be understood to mean a threshold being met and/or exceeded, for example, such as a threshold amount and/or quantity of traffic notification frames being met and/or exceeded. In this example, the AP may not wait until the end of the sub-window (e.g., until an end of a PIFS) to take control of the channel. Advantages of this example representation of dynamic sub-window size adjustment, in some examples, include improved optimization of dynamic sub-window size adjustment (e.g., based on: (1) a total quantity of timeslots being reduced; (2) a ratio, of a duration of a final timeslot of the sub-window to a quantity of preceding timeslot(s), increasing; and/or other factors).

In some examples, such as in the presence of hidden node collisions, based on one or more transmissions being properly received by an AP, the AP may confirm (e.g., may be required to confirm) that a channel is clear before starting a new transmission. For example, as shown in scenario 1400, a first station STA 1 and a second station STA 2 may not sense one another's transmissions. Thus, both STA 1 and STA 1 may send traffic notifications (e.g., such as BSRs) to the AP, for example, overlapping at least partially with one another. Before the AP takes control of the channel, the AP may confirm (e.g., may be required to confirm) that the final one of the BSR transmissions from STA 1 and STA 2 has finished. For example, the AP may continuously sense the channel until the AP determines that the channel has been idle for a predetermined duration (e.g., such as a duration of one or more timeslots, etc.). Scenario 1400 is a subset of scenario 1405, which shows the AP transmitting a TF after sensing the channel being idle for the predetermined duration.

Referring now to FIGS. 15A-15B, a second example representation of dynamic sub-window size adjustment is provided. In one example, an AP may not send a TF during a first sub-window (e.g., a current sub-window). In this example, one or more STAs assigned to a second sub-window, wherein the second sub-window is subsequent (e.g., immediately following) the first sub-window, may use at least a portion of any remaining time of the first sub-window as timeslot(s) for channel access contention. Advantages of this example representation of dynamic sub-window size adjustment, in some examples, include improved optimization of dynamic sub-window size adjustment (e.g., based on: (1) a total quantity of timeslots being reduced; (2) a ratio, of a duration of a final timeslot of the sub-window to a quantity of preceding timeslot(s), increasing; and/or other factors).

In some examples, such as in the presence of hidden nodes, collisions may occur and/or increase. Thus, one or more STAs may utilize the second example representation of dynamic sub-window size adjustment, for example, based on an AP explicitly allowing and/or instructing the one or more STAs to do so. For example, as shown in scenarios 1500 and 1505, a first station STA 1 and a second station STA 2 may be configured to send traffic notifications (e.g., such as BSRs) to the AP during a first sub-window. In scenario 1500, the transmission of STA 1 is properly decoded, and based on the AP determining that no transmissions occur in at least one subsequent timeslot, one or more other STAs belonging to a subsequent sub-window may be allowed to begin channel access contention in a next timeslot. In scenario 1505, a PO is shown first with an unaltered structure and second with a reshaped structure, wherein the reshaped PO has been restructured based on the transmissions from STA 1 and STA 2 received during the first sub-window. As in scenario 1500, based on the AP determining that no transmissions occur in at least one subsequent timeslot, one or more other STAs belonging to a subsequent sub-window may be allowed to begin channel access contention in a next timeslot.

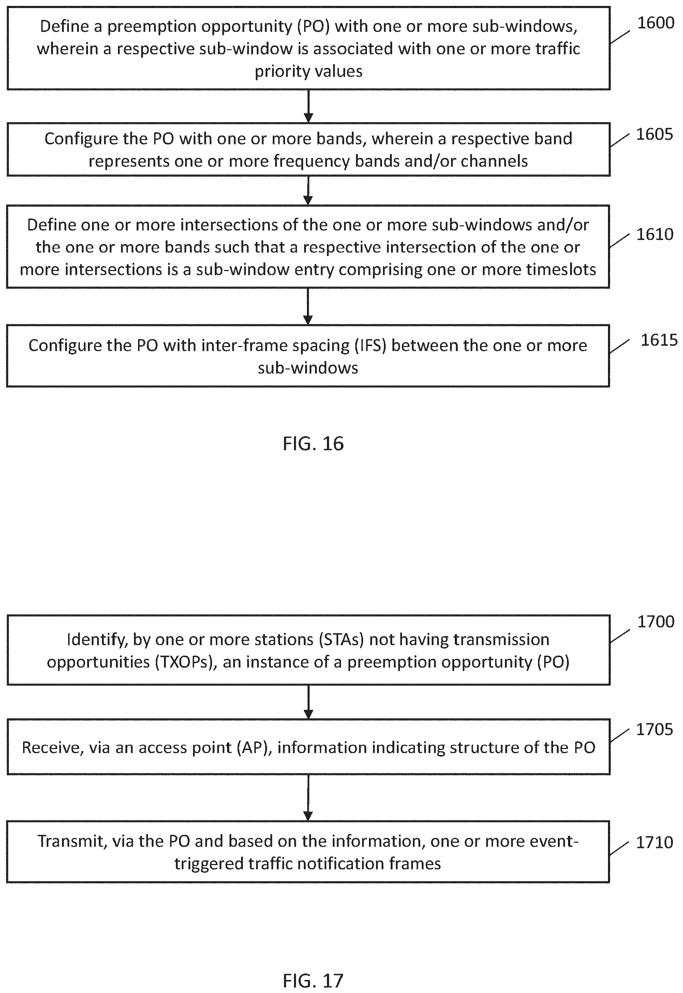

FIGS. 16-18 show example methods which may be implemented by one or more apparatuses described herein.

Referring now to FIG. 16, an example method implemented by one or more apparatuses described herein is provided. Although shown sequentially, the operations of FIG. 16 may be performed separately or in any combination. Thus, the method of FIG. 16 may include the performance of any one or more of the operations depicted in blocks 1600, 1605, 1610, and/or 1615.

As shown in block 1600, the method includes defining a preemption opportunity (PO) with one or more sub-windows, wherein a respective sub-window is associated with one or more traffic priority values.

As shown in block 1605, the method further includes configuring the PO with one or more bands, wherein a respective band represents one or more frequency bands and/or channels.

As shown in block 1610, the method further includes defining one or more intersections of the one or more sub-windows and/or the one or more bands such that a respective intersection of the one or more intersections is a sub-window, entry comprising one or more timeslots.

As shown in block 1615, the method further comprises configuring the PO with inter-frame spacing (IFS) between the one or more sub-windows.

Referring now to FIG. 17, an example method implemented by one or more apparatuses described herein is provided. Although shown sequentially, the operations of FIG. 17 may be performed separately and/or in combination. Thus, the method of FIG. 17 may include the performance of any one or more of the operations depicted in 1700, 1705, and 1710.

As shown in block 1700, the method comprises identifying, by one or more stations (STAs) not having transmission opportunities (TXOPs), an instance of a preemption opportunity.

As shown in block 1705, the method further comprises receiving, via an access point (AP), information indicating structure of the PO.

As shown in block 1710, the method further comprises transmitting, via the PO and based on the information, one or more traffic notification frames (for example event-triggered traffic notification frames).

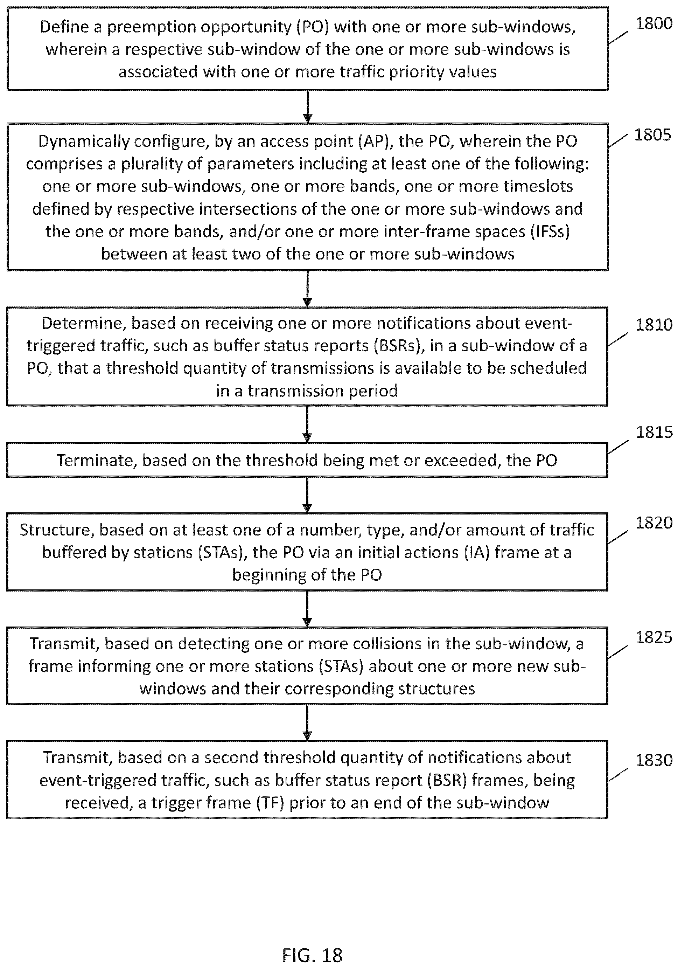

Referring now to FIG. 18, an example method implemented by one or more apparatuses described herein is provided.

As shown in block 1800, a PO may be defined with one or more sub-windows, wherein a respective sub-window of the one or more sub-windows is associated with one or more traffic priority values.

As shown in block 1805, an AP may dynamically configure the PO, wherein the PO comprises a plurality of parameters including at least one of the following: (1) one or more sub-windows; (2) one or more bands; (3) one or more timeslots defined by respective intersections of the one or more sub-windows and the one or more bands; and/or (4) one or more IFSs between at least two of the one or more sub-windows.

As shown in block 1810, it may be determined that, based on receiving one or more notifications about event-triggered traffic (e.g., such as BSRs) in a sub-window of a PO, that a threshold quantity of transmissions is available to be scheduled in a transmission period.

As shown in block 1815, the PO may be terminated based on the threshold being met and/or exceeded.

As shown in block 1820, the PO may be structured, based on at least one of a number, type, and/or amount of traffic buffered by STAs, via an IA frame at a beginning of the PO.

As shown in block 1825, a frame informing one or more STAs about one or new sub-windows and their corresponding structures may be transmitted based on detecting one or more collisions in the sub-window.

As shown in block 1830, a TF may be transmitted prior to an end of the sub-window based on a second threshold quantity of notifications about event-triggered traffic (e.g., such as BSRs) being received.

Figures 16-18 illustrate flowcharts depicting methods according to an example embodiment of the present disclosure. It will be understood that each block of the flowcharts and combination of blocks in the flowcharts may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory device of an apparatus employing an embodiment of the present disclosure and executed by a processor. As will be appreciated, any such computer program instructions may be loaded onto a computer or other programmable apparatus (for example, hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

Many modifications and other embodiments set forth herein will come to mind to one skilled in the art to which this disclosure pertains having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims.

Moreover, although the foregoing descriptions and the associated drawings describe certain example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An apparatus comprising:
at least one processor; and
at least one memory storing instructions that, when executed by the at least one processor, cause the apparatus at least to perform:
defining a preemption opportunity (PO) with one or more sub-windows, wherein a respective sub-window of the one or more sub-windows is associated with one or more traffic priority values; and
dynamically configuring, by an access point (AP), the preemption opportunity (PO), wherein the PO comprises a plurality of parameters including at least one of the following:
one or more sub-windows;
one or more bands;
one or more timeslots defined by respective intersections of the one or more sub-windows and the one or more bands; or
one or more inter-frame spaces (IFSs) between at least two of the one or more sub-windows.

2. The apparatus of claim 1, wherein the instructions, when executed by the at least one processor, further cause the apparatus at least to perform:
determining, based on receiving one or more notifications about event-triggered traffic, such as buffer status reports (BSRs), in a sub-window of a PO, that a threshold quantity of transmissions is available to be scheduled in a transmission period; and
terminating, based on the threshold being met or exceeded, the PO.

3. The apparatus of claim 1 or claim 2, wherein the instructions, when executed by the at least one processor, further cause the apparatus at least to perform:
structuring, based on at least one of a number, type, or amount of traffic buffered by stations (STAs) or based on an estimated quantity of event-based frames eligible for TXOP preemption, the PO via an initial actions (IA) frame at a beginning of the PO.

4. The apparatus of any of claims 1 to 3, wherein the instructions, when executed by the at least one processor, further cause the apparatus at least to perform:
transmitting, based on detecting one or more collisions in the sub-window, a frame informing one or more stations (STAs) about one or more new sub-windows and their corresponding structures.

5. The apparatus of any of claims 1 to 4, wherein the instructions, when executed by the at least one processor, further cause the apparatus at least to perform:
transmitting, based on a second threshold quantity of notifications about event-triggered traffic, such as buffer status report (BSR) frames, being received, a trigger frame (TF) prior to an end of the sub-window.

6. The apparatus of claim 2, wherein the instructions, when executed by the at least one processor, further cause the apparatus at least to perform:
terminating the PO early such that the terminating occurs within at least one of a plurality of inter-sub-window periods.

7. The apparatus of claim 2 or claim 6, wherein the plurality of inter-sub-window periods is comprised of at least one of the following:
short inter-frame space (SIFS);
point coordination function (PCF) inter-frame space (PIFS); or
distributed coordination function (DCF) inter-frame space (DIFS).

8. The apparatus of any of claims 2 or 6-7, wherein the instructions, when executed by the at least one processor, further cause the apparatus at least to perform:
determining whether the threshold is met or exceeded based on at least one of a maximum transmission period allowed by a transmission opportunity (TXOP) holder or another type of restriction enforced by the AP or other entities.

9. The apparatus of claim 3, wherein the instructions, when executed by the at least one processor, further cause the apparatus at least to perform:
configuring at least one of the following:
a quantity of sub-windows;
a quantity of bands; or
a quantity of timeslots per sub-window.

10. The apparatus of claim 3 or claim 9, wherein the instructions, when executed by the at least one processor, further cause the apparatus at least to perform:
not allowing STAs with event-triggered traffic having a traffic priority value below a predetermined traffic priority value to report during the PO.

11. The apparatus of claim 4, wherein the instructions, when executed by the at least one processor, further cause the apparatus at least to perform:
indicating which STA(s) of the one or more STAs are allowed to perform channel access in the one or more new sub-windows.

12. The apparatus of claim 4 or claim 11, wherein the instructions, when executed by the at least one processor, further cause the apparatus at least to perform:
indicating permissible bands in which at least one of the one or more STAs that used the bands in a prior sub-window is allowed to perform channel access in the one or more new sub-windows.

13. The apparatus of claim 5, wherein the instructions, when executed by the at least one processor, further cause the apparatus at least to perform:
configuring, based on the AP not transmitting a TF prior to an end of a current sub-window, at least one of the one or more STAs assigned to a next sub-window subsequent to the current sub-window to use any remaining time of the current sub-window as timeslots for channel access.

14. A method comprising:
defining a preemption opportunity (PO) with one or more sub-windows, wherein a respective sub-window of the one or more sub-windows is associated with one or more traffic priority values; and
dynamically configuring, by an access point (AP), the PO, wherein the PO comprises a plurality of parameters including at least one of the following:
one or more sub-windows;
one or more bands;
one or more timeslots defined by respective intersections of the one or more sub-windows and the one or more bands; or
one or more inter-frame spaces (IFSs) between at least two of the one or more sub-windows.

15. The method of claim 14, further comprising:
determining, based on receiving one or more notifications about event-triggered traffic, such as buffer status reports (BSRs), in a sub-window of a PO, that a threshold quantity of transmissions is available to be scheduled in a transmission period; and
terminating, based on the threshold being met or exceeded, the PO.
